# EUROPEAN PATENT SPECIFICATION

(11) **EP 0 611 040 B1**
(45) Date of publication and mention of the grant of the patent: **02.04.1997**
(21) Application number: 94300342.6
(22) Date of filing: 18.01.1994
(51) Int. Cl.: H05B 33/04, H05B 33/10, H05B 33/12, H05B 33/14, H05B 33/26, B60Q 1/30, B60Q 1/32

(54) **Electroluminescent light strip**
Elektrolumineszentes Leuchtband
Bande électroluminescente

(30) Priority: 10.02.1993 US 16123
(43) Date of publication of application: 17.08.1994
(73) Proprietor: THE STANDARD PRODUCTS COMPANY, Cleveland Ohio 44102 (US)
(72) Inventor: Gustafson, Thomas Lloyd, Southfield, Michigan 48076 (US); Brookman, Marc Arthur, Livonia, Michigan 48152 (US)
(74) Representative: Jones, Michael Raymond

(56) References cited:
- EP-A- 0 415 372
- GB-A- 2 198 286
- GB-A- 2 253 740

## Description

This invention relates to an elongate electroluminescent light strip and to a continuous method of making such a strip. More particularly, but not exclusively, the present invention relates to elongate electroluminescent light strips useful as mouldings for vehicles and as building, pathway and other light marking strips and to a continuous method of making such strips.

Electroluminescent lights have been known for many years and have been made by using conventional sheet lamination techniques to make a laminate structure of layers of a phosphor matrix sandwiched between electrically conductive layers. Typically, the electrically conductive layers include an aluminum foil layer and a conductive transparent sheet such as a layer of indium tin oxide. The foil can be insulated from the phosphor matrix by a dielectric coating. The electroluminescent lighting or lamp is often covered with a transparent moisture barrier film such as a polychlorotrifluoroethylene film.

Recently there has been development of electroluminescent technology for backlighting instruments and computer screens and for ornaments for vehicles. Three recent U.S. patents employing electroluminescent lamps in association with vehicles are Nos. 4,443,832 for "Self-illuminating Ornament for Vehicles"; 4,494,326 for "Electroluminescent Display Structure for Motor Vehicle Window" and 4,603,065 for "Decorative Part." An elongated electroluminescent light strip has also been developed and is disclosed in U.S. Patent No. 3,161,797 for "Electroluminescent Device."

Conventional electroluminescent light techniques have encountered several problems. The phosphor matrix is extremely sensitive to moisture and one problem encountered in electroluminescent lamp construction relates to the destructive effect which water vapour has on the phosphor layer. In a conventional laminate construction, a desiccant layer is sometimes used along with protective films having low vapour transmission rates to increase the longevity of the life of the phosphor matrix. The prevention of moisture encroachment into the lamp's interior is of paramount importance in electroluminescent light construction. This is especially true with the electroluminescent lamps sealed in an Aclar envelope, especially as, typically, the Aclar electroluminescent lamps have wire leads which provide a place for moisture to enter the lamp.

Conventional lights are generally made of relatively thin construction with the protective film having edges either adhesively bonded or thermally fused using high pressure rollers. The thin protective film provides marginal protection against moisture ingress, but high pressure rollers, as used in conventional sheet lamination techniques, can damage the thin, fragile layers of the electroluminescent light. Conventional lamination techniques also, of course, can lead to wrinkles which are unsightly and can lead to moisture ingress into the light's interior. Thermally fusing leads to another problem, i.e. possibly damaging the phosphor matrix by excessively heating it. Another problem generally encountered in lamp construction relates to the relatively fragile nature of the various layers and of the lamp itself. Traditionally electroluminescent lights have been constructed to be as thin as possible and hence have had little inherent structural integrity. The electrically conductive layers are subject to damage during processing and, if wires are incorporated into the light, they tend to damage the other layers during manufacture of the light.

GB-A-2253740 discloses an elongate electroluminescent light strip comprising:
at least one electroluminescent lamp element including a first conductive layer, a phosphor matrix layer and a second conductive layer;
means for electrically activating the electroluminescent lamp element; and
a continuous, moisture impermeable extruded polymer encapsulating the electroluminescent lamp element.

There remains a need for an improved electroluminescent light strip and for an improved continuous method for making an elongate electroluminescent light strip. In particular, there remains a need for a method in which the moisture-sensitive electroluminescent lamp is well protected from the environment and which provides an electroluminescent lamp having good structural integrity. Also, as will be apparent to those skilled in the art, it is desirable to have an economical, continuous method for making an elongated electroluminescent light strip.

According to one aspect of the present invention, there is provided an elongate electroluminescent light strip comprising:
at least one electroluminescent lamp element including a first conductive layer, a phosphor matrix layer and a second conductive layer;
means for electrically activating the electroluminescent lamp element; and
a continuous, moisture impermeable extruded polymer encapsulating the electroluminescent lamp element:
characterised in that phosphor particles in the phosphor matrix layer are coated with hydrolyzed alkylaluminium to make the phosphor particles moisture-resistant.

Preferably the means for electrically activating the electroluminescent lamp element comprises a pair of bus strips electrically connected on either side of the electroluminescent lamp element.

Conveniently the bus strips extend along the length of the electroluminescent lamp element. Preferably the extruded polymer is a moisture barrier.

Preferably there is also present a silver conductive ink disposed between the first conductive layer and the first bus strip.

Preferably the extrudate is extruded onto and around the electroluminescent lamp element.

Preferably the first conductive layer is provided with a dielectric coating.

Preferably the phosphor particles include ZnS:Cu electroluminescent phosphor.

Preferably there is also present a semi-transparent metallized film layer disposed directly contiguous to the phosphor matrix layer, for providing a decorative appearance when the lamp or lighting elements are off and for allowing light to pass therethrough when the lamp or light elements are illuminated.

Conveniently the semi-transparent film is electrically conductive such that one of the bus strips is placed adjacent the film on a side of the film opposite the phosphor matrix layer.

Preferably the first and second conductive layers are formed of a material selected from indium tin oxide, indium oxide, carbon or silver.

Preferably the encapsulating medium is a low vapour transmission rate polymeric material, preferably selected from ionomer resin, high density polyethylene and polychlorotrifluoroethylene.

Conveniently the strip is flexible, particularly where the strip is to serve as a trim moulding for a vehicle. In this event the strip preferably includes a means for attaching the strip to an automated vehicle.

Another aspect of the present invention provides a process for the manufacture of an elongate electroluminescent light strip, comprising the steps of:
a) providing at least one elongate electroluminescent lamp element which includes an electrically conductive layer, a phosphor matrix layer and at least two bus strips, wherein the bus strips extend from the electroluminescent light strip; and
b) encapsulating the at least one elongate electroluminescent lamp element in an extrudate by extruding a polymeric material about the electroluminescent lamp element:
characterised in that the phosphor matrix layer is provided with a plurality of phosphor particles coated with a hydrolyzed alkylaluminium so as to make the phosphor matrix layer moisture-resistant.

The process preferably also includes positioning the bus strips along the entire length of the electroluminescent lamp on opposite sides of the electroluminescent lamp for electrically energizing the electroluminescent lamp along substantially the entire length of the electroluminescent lamp.

The process may additionally include interposing a layer of semi-transparent metallized film over the phosphor matrix layer prior to the encapsulating step.

Preferably the elongate electroluminescent lighting strip is provided with individual spaced apart electroluminescent lamp segments such that the electroluminescent light strip is selectively divisible into smaller strips.

For a better understanding of the present invention and to show how the same may be carried into effect, reference will now be made, by way of example, to the accompanying drawings, in which:-
Figure 1 is an elevational view, broken away, of a motor vehicle with a preferred embodiment of electroluminescent light strip in accordance with the present invention mounted thereon as a body side moulding;
Figure 2 is a sectional view taken along line 2-2 in Figure 1;

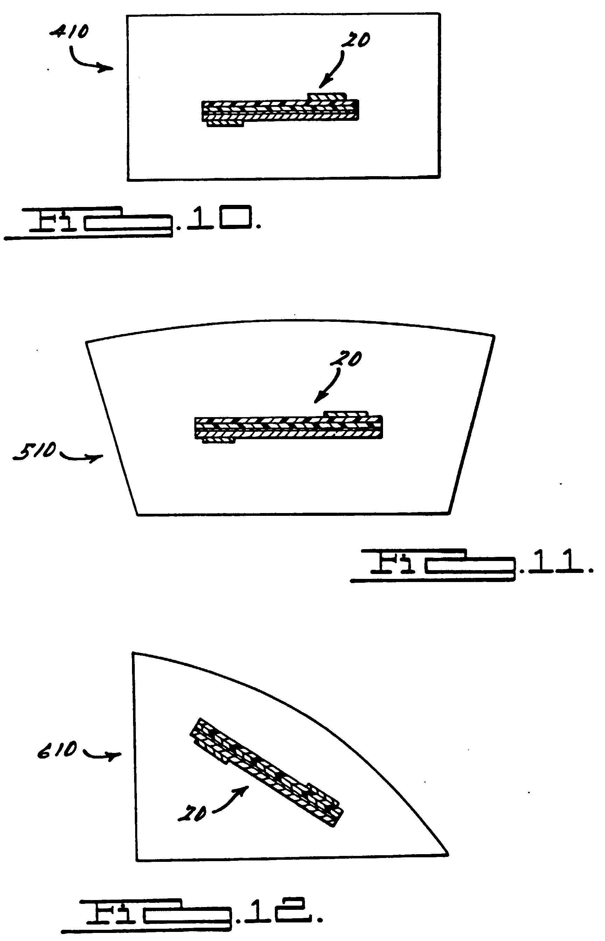

Figure 3 is a perspective view partially in cross-section and broken away illustrating an insert of the body side moulding of Figures 1 and 2;
Figure 4 is a perspective view partially in cross-section and broken away illustrating an alternative preferred embodiment of electroluminescent light strip in accordance with the present invention;
Figure 5 is a cross-sectional view similar to Figure 2 but showing another alternative preferred embodiment of light strip according to the present invention;
Figure 6 is a schematic view illustrating a method in accordance with the present invention;
Figure 7 is a perspective view, partially in cross-section and broken away, showing yet another preferred embodiment of an electroluminescent light strip of the present invention, having spaced lamp elements and suitable, for example, for emergency pathway lighting;
Figure 8 is a cross-sectional view taken along line 8-8 in Figure 7;
Figure 9 is a cross-sectional view taken along line 9-9 in Figure 7;
Figures 10-12 are each cross-sectional views similar to Figure 2 but showing further alternative preferred embodiments of the present invention;
Figure 13 is a cross-sectional view showing an alternative preferred embodiment similar to the embodiment of Figure 4;
Figure 14 is a cross-sectional view showing another alternative preferred embodiment of the present invention; and
Figure 15 is a sectional end view illustrating another alternative preferred embodiment of the present invention.

### DESCRIPTION OF THE INVENTION

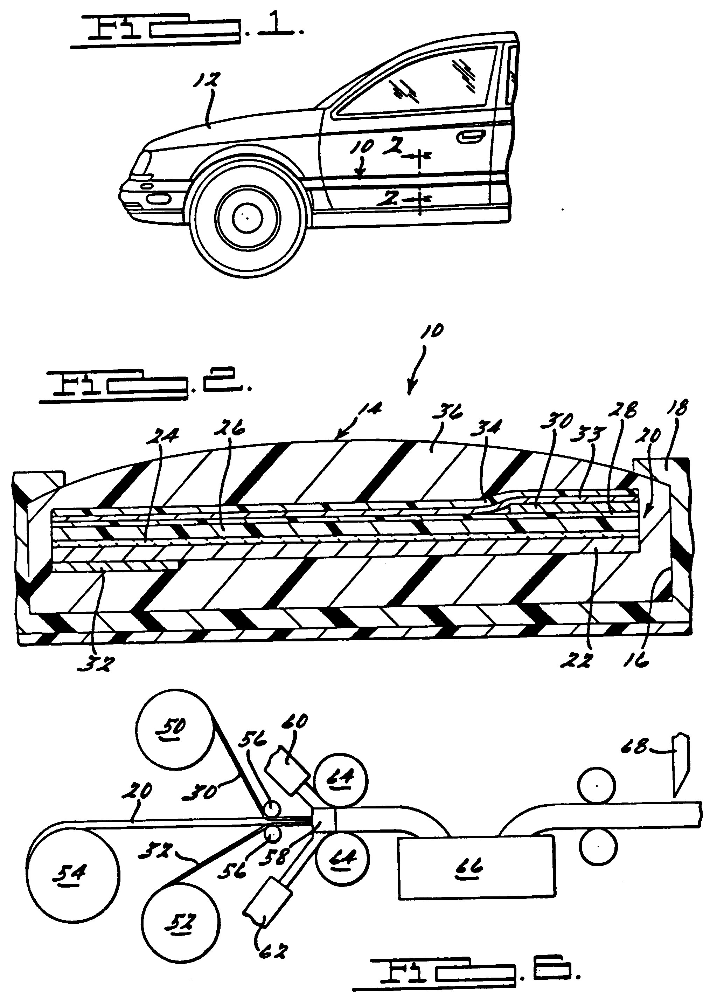

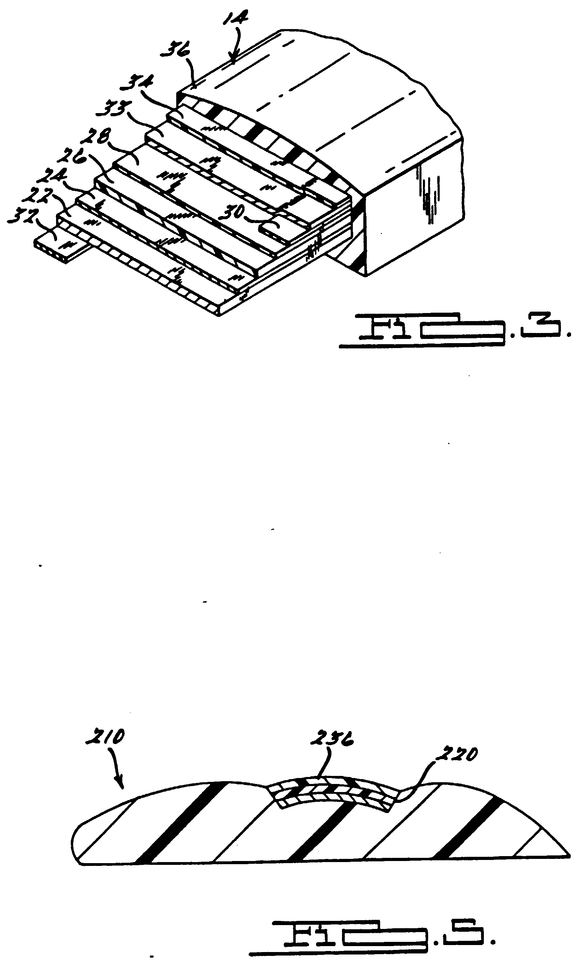

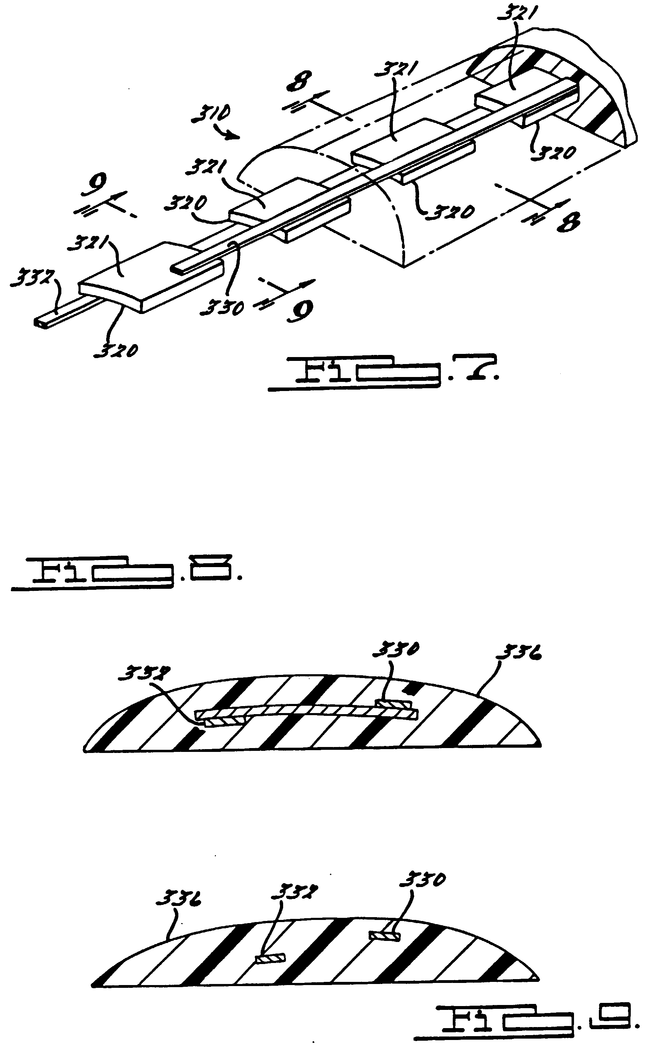

Now referring to the Figures, a preferred embodiment of the present invention is shown in Figure 1 as a body side molding 10 on automotive vehicle 12. As best shown in Figure 2, molding 10 broadly comprises elongated electroluminescent (hereinafter, "EL") light insert strip 14, snappingly held within channel 16 of base 18 of body side molding 10.

EL light insert strip 14 comprises an electroluminescent lamp 20 (hereinafter, "EL") which has a laminate structure of layers of aluminum foil base electrode 22, dielectric coating 24 comprising barium titanate, phosphor matrix layer 26, and transparent conductive layer 28 comprising indium tin oxide.

Preferably, the phosphor matrix layer is made from phosphor which is coated to become moisture resistant For example, the phosphors may be coated with hydrolyzed alkylaluminum which desensitizes the phosphors to atmospheric moisture. All or part of an inert fluidized gas, such as nitrogen or argon, is passed through a bubbler containing trimethylaluminum heated to a temperature high enough to produce an equilibrium vapor pressure sufficient to yield the desired coating rate. The fluidized bed is heated to a temperature between about 150° to about 250°C during the heating process.

The trimethylaluminum is hydrolyzed by reacting the gaseous water vapor. The inert gas stream is passed through a water filled bubbler before entering the fluidized bed. The temperature of the water bubbler and the flow rate of the inert gas can be controlled so that only enough water to fully react all of the trimethylaluminum molecules is used. When the desired thickness of hydrolyzed trimethylaluminum has been coated on the phosphor particles, the reaction is discontinued, the coated phosphor particles are removed and the phosphor matrix layer is formed by known methods. The phosphors utilized for carrying out the hydrolization process generally are commercially available. One such phosphor is ZnS:Cu EL phosphor type 723 available from Sylvania.

Typically, the first bus strip 30 extends longitudinally along conductive layer 28 and is in electrical contact therewith. Second bus strip 32 extends longitudinally along base electrode 22 and is in electrical contact therewith. This ensures consistent electric potential along the length of EL lamp 20 and thereby provides even light color and intensity. Optionally, an additional coating of conductive ink can be used to enhance the conductivity between bus strip 30 and conductive layer 28. EL lamp 20 functions in the known manner for conventional electroluminescent lights.

In the embodiments herein bus strips 30 and 32 are shown as rectangular cross-section copper bars. However, conventional round copper wire or other elongate conductors could be utilized as bus strips in the process and articles of the present invention.

To enhance the appearance of molding 10 during daylight hours, EL lamp 20 may be provided with a semi-transparent overlayer of metalized film. For example, a polyester film 34 having a thin layer 33 of aluminum vacuum deposited on one side is suitable. Metalized film 34 preferably has about 50% light transmission and about 50% light reflectance.

EL lamp 20 and metalized film 34 are completely encapsulated by a moisture resistant extrudate cover 36 to provide EL light insert strip 14. Cover 36 is continuous around EL lamp 20 and metalized film 34 except for the longitudinal ends of bus strips 30 and 32 as described further hereinafter. In a highly preferred embodiment cover 36 comprises a low vapor transmission rate polymeric material such as Surlyn®, an ionomer resin, high density polyethylene, or polychlorotrifluoroethylene. It is also contemplated that other polymeric materials having somewhat higher vapor transmission rates such as polyvinylchloride could also be utilized.

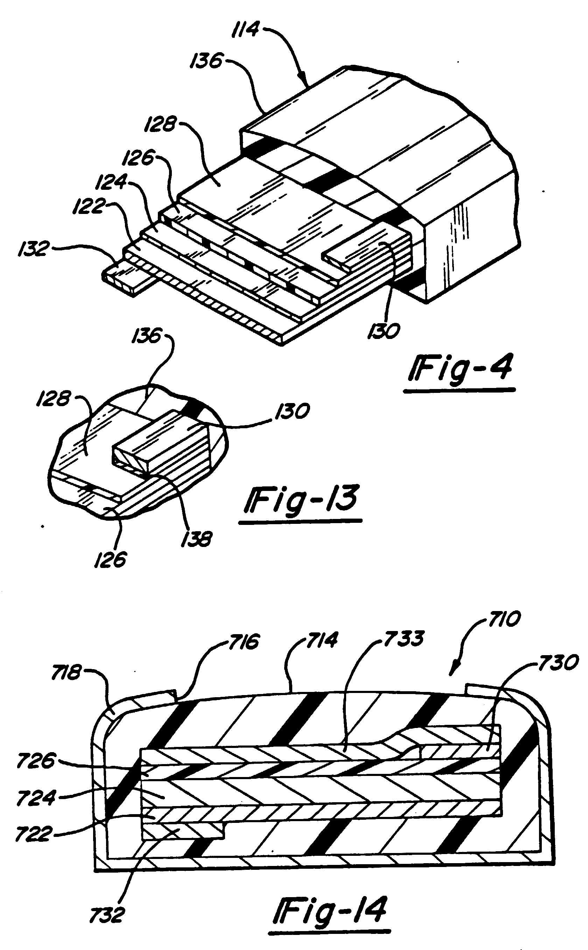

Referring to Figure 4 there is shown an alternative embodiment of an electroluminescent light strip 114 which has an EL lamp encapsulated therein. The lamp includes an aluminum foil base electrode 122, dielectric coating 124 comprising barium titanate, a phosphor matrix layer 126 having an indium tin oxide layer 128 and first and second bus strips 130 and 132. The phosphor matrix layer is prepared in the same manner as described with reference to Figure 1. Again, the EL light strip 114 is formed by encapsulating EL lamp in low vapor transmission rate extrudate in a manner analogous to EL lamp 20. As shown more clearly in Figure 13 the embodiment of Figure 4 can be provided with a layer of silver conductive ink 138 to enhance conductivity. Typically, this layer of silver conductive ink is disposed on the indium tin oxide layer Immediately beneath bus strip 130.

Now referring to Figure 5, yet another embodiment of the present invention is shown and indicated generally by the numeral 210. Strip 210 comprises an EL lamp of construction analogous to that of EL lamp 20 and indicated generally by the numeral 220. EL lamp 220 is encapsulated by extrudate 236 which is adhesively or fusion bonded into body 218 to provide strip 210. The EL light of this embodiment is electrified by conventional means such as electrodes on either end. The elongate strip is manufactured by an extrusion process as described further hereinafter for fully encapsulating the EL element from moisture.

Now referring to Figure 6, a dual extruslon method for making an EL light strip of the present invention is schematically illustrated. Thus, first lower bus strip 30 is fed from roll 50, second bus strip 32 is fed from roll 52, joined with EL lamp 20 from roll 54 and passed between feeder rolls 56 and then through die 58 where extruders 60 and 62 provide encapsulating body 36 thereon. The strip is passed between shaping rollers 64 and then cooled in a cooling tank 66. The zone temperature profile for extruding surlyn ranges from 150°C. (302°F.) to 230°C. (446°F.). The preferred die temperature is around 200°C. (390°F.). In a dual forming approach the lower and upper extrudate are each individually profiled as they exit the dies at a temperature of approximately 180°C. The distance traversed to the forming rolls can be varied to allow for cooling adjustment which can vary with the mass of the profiled extrudate. A benefit of the dual extrusion approach is that the extrudates can be final formed through the forming rolls. This allows for the extrudates to breathe. That is, when the lamp is intruded into the extrusion the material displacement can be controlled by the forming rolls. Excess material can be vented to the side and trimmed. The result is a process which has very low pressure exerted on the surface of the lamp foil and does not drive the bus through the fragile lamp layers causing a short and also allows for some particle contamination without shorting out the lamp foil. Then the strip is cut into desired lengths by cut-off blade 68 for shipping and/or storage. Because of the sensitivity of the EL light to moisture and the like the EL light must be integrated in the strip by utilizing an environmentally controlled chamber or the like in the process. The EL lamp itself can be profiled so that the lamp can be arced, bent and injected between the two extrudates without losing form. Therefore the geometry of the lamp can be controlled independent of the geometry of the extrudates. A cross-head extrusion can also be used to provide encapsulating body 36 about EL lamp 20.

The above process may be accomplished by providing a feed horn (not shown) from an environmentally controlled chamber containing the EL lamp stock. A pair of tubes are provided immediately on the upper and lower sides of the feed horn for guiding of the bus strips 30 and 32. The feed horn is placed immediately adjacent the extruder and the EL lamp, bus strips and extruded strips are pulled through the extruder with chrome pinch type rollers for providing the continuous extruding process.

In order to electrically connect the EL light, the ends of EL insert 14 are cut, then encapsulating body 36 is stripped away from upper and lower bus strips 30 and 32. The bus strips are then connected to the desired sources of electricity.

Referring now to Figures 7 through 9, there is shown an alternate embodiment of an electroluminescent light strip 314 which has spaced EL lamp elements and has advantages in installations in the field. It has been problematic in the past that should an electroluminescent light need replacement it was sometimes necessary to access the electrical connections. During this process the EL light element of prior art structures might be exposed to moisture which would make the light inoperable. In this embodiment of the present invention this problem is solved in that suitable locations are provided for cutting and splicing of the wires while maintaining the EL light element in a moisture protected environment.

In accordance with this embodiment of the present invention, the strip 314 includes spaced EL lamp elements 320 which are encapsulated in a low vapor transmission rate polymeric extrudate 336. Lamp elements 320 are commonly electrically connected to first and second bus strips 330 and 332.

As shown in Figure 9, the lamps are individually sealed in the polymer encapsulation material 336 such that they are isolated from one another. This allows the field installer the opportunity to cut the strip to a desired length between any pair of lamps and strip the encapsulating material from the bus strips at these locations without exposing any EL lamp materials to the environment.

As will be appreciated the length and the spacing of the lamps therebetween can be set up in any desired lengths which may be necessary in a particular application. The strips would be useful in trim strip applications for walkway markers or roadway markers and the like. Thus, the top surface 321 of each lamp element 320 can be provided with indicia or other markings.

Further alternative preferred embodiments of the present invention are shown in Figures 10-12 which illustrate Identical EL lamps 20 encapsulated in extrudates of different cross-sectional shapes. Thus, molding 410 has a rectangular cross-sectional shape, molding 510 has a bowed cross-sectional shape and molding 610 has a shape suitable for a corner molding.

Figure 14 illustrates yet another preferred embodiment of the present invention. The molding 710 comprises elongated electroluminescent light insert strip 714 held within channel 716 of base 718. The electroluminescent light insert strip 714 includes an electroluminescent lamp which has a laminate structure of layers of an aluminum foil base electrode 722, dielectric coating 724 comprising barium titanate, phosphor matrix layer 726 and metalized layer 733 comprising indium tin oxide. The first bus strip 730 extends longitudinally along the phosphor matrix layer 726 and in electrical contact therewith. Second bus strip 732 extends longitudinally along base electrode 722 and is in electrical contact therewith. This ensures consistent electrical potential along the length of EL lamp 720 and thereby provides even light color and intensity.

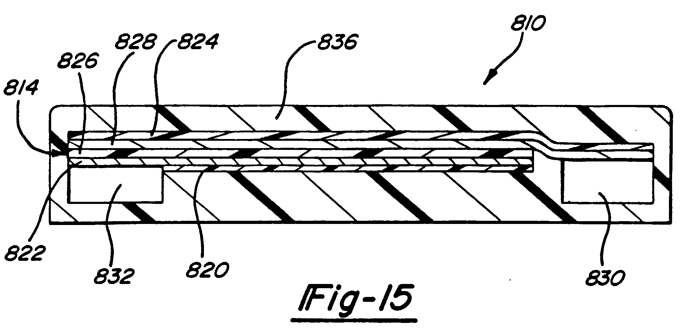

Figure 15 illustrates still another preferred embodiment of the present invention. The molding 810 comprises an elongated electroluminescent light insert 814 and an elastomeric coating 836. The electroluminescent light insert 814 includes a base polyester film layer 820 and an adjacent electrode 822 formed from a conductive material such as indium tin oxide, indium oxide, carbon or silver among others. Adjacent the conductive electrode 822 is a phosphor matrix layer 826 screen printed onto the conductive electrode 822 with a segment of the phosphor matrix layer being left exposed or cut-away to allow the bus strip 832 to contact conductive layer 828. The clear conductive layer 828 typically consist of indium oxide or indium tin oxide which is screen printed onto the phosphor matrix layer 828 with an insulative layer 824 being screen printed onto the clear conductive layer.

Alternatively, the two conductive layers 822 and 828, respectively, can be reversed such that the light emitting side projects through the polyester film with the conductive screen printed layer 828 being applied as the outermost layer adjacent the insulating layer.

It will be understood by those skilled in the art that the overall shape of the electroluminescent light strips of the present invention will be dictated by the shape of the extrudate dies. Essentially, any shape which effectively encapsulates the electroluminescent light strips is possible.

## Claims

1. An elongate electroluminescent light strip (10) comprising:
at least one electroluminescent lamp element (20) including a first conductive layer (22), a phosphor matrix layer (26) and a second conductive layer (28);
means (30, 32) for electrically activating the electroluminescent lamp element (20); and
a continuous, moisture impermeable extruded polymer (36) encapsulating the electroluminescent lamp element (20) :
characterised in that phosphor particles in the phosphor matrix layer (26) are coated with hydrolyzed alkylaluminium to make the phosphor particles moisture-resistant.

2. An elongate electroluminescent light strip (10) according to claim 1, wherein the means for electrically activating the at least one electroluminescent lamp element (20) comprises a pair of bus strips (30, 32) electrically connected on either side of the electroluminescent lamp element (20).

3. An elongate electroluminescent light strip (10) according to claim 2, wherein the bus strips (30, 32) extend along the length of the electroluminescent lamp element (20).

4. An elongate electroluminescent light strip (10) according to claim 2 or 3, which also includes a layer of silver conductive ink (128) disposed between the first conductive layer (122) and the first bus strip (130).

5. An elongate electroluminescent light strip (10) according to any preceding claim, wherein the continuous, moisture impermeable polymer (36) is extruded onto and around the electroluminescent lamp element (20).

6. An elongate electroluminescent light strip (10) according to any preceding claim, wherein the strip (10) is a trim moulding (10) for a vehicle (12).

7. An elongate electroluminescent light strip (10) according to any preceding claim, wherein the first conductive layer (22) is provided with a dielectric coating (24).

8. An elongate electroluminescent light strip (10) according to any preceding claim, wherein the phosphor particles include ZnS:Cu electroluminescent phosphor.

9. An elongate electroluminescent light strip (10) according to any preceding claim, which also includes a semi-transparent metallized film layer (34) opposite the phosphor matrix layer (26).

10. An elongate electroluminescent light strip (10) according to claim 9, when appendant to claim 2, 3 or 4, wherein the semi-transparent film (34) is electrically conductive such that one of said bus strips (30, 32) is placed adjacent the film (34) on a side of the film (34) opposite the phosphor matrix layer (26).

11. An elongate electroluminescent light strip (10) according to any preceding claim, wherein the first and second conductive layers (22, 28) are formed of a material selected from indium tin oxide, indium oxide, carbon and silver.

12. An elongate electroluminescent strip (10) according to any preceding claim, wherein the at least one electroluminescent lighting element (20) is a plurality of spaced apart electroluminescent lighting elements (321) disposed along the length of the electroluminescent light strip (10).

13. An elongate electroluminescent light strip (10) according to any preceding claim, wherein the extruded polymer (36) is a low vapour transmission rate polymer.

14. An elongate electroluminescent light strip (10) according to claim 13, wherein the low vapour transmission rate polymer (36) is selected from ionomer resin, high density polyethylene, and polychlorotrifluoroethylene.

15. An elongate electroluminescent light strip (10) according to any preceding claim, wherein the strip (10) is flexible.

16. An elongate electroluminescent light strip (10) according to any preceding claim, wherein the extruded polymer (36) is a moisture barrier.

17. A process for the manufacture of an elongate electroluminescent light strip (10), comprising the steps of:
a) providing at least one electroluminescent lamp element (20) which includes an electrically conductive layer (22), a phosphor matrix layer (26) and at least two bus strips (30, 32), wherein the bus strips (30, 32) extend from the electroluminescent light strip (10; and
b) encapsulating the at least one elongate electroluminescent lamp (20) in an extrudate (36) by extruding a polymer material about the electroluminescent lamp element (20):
characterised in that the phosphor matrix layer is provided with a plurality of phosphor particles coated with a hydrolyzed alkylaluminium so as to make the phosphor matrix layer (26) moisture-resistant.

18. A process according to claim 17, which includes positioning the bus strips (30, 32) along the entire length of the electroluminescent lamp element (20) on opposite sides of the electroluminescent lamp element (20) for electrically energizing the electroluminescent lamp element (20) along substantially the entire length of the electroluminescent lamp element (20).

19. A process according to claim 17 or 18, which includes the step of interposing a layer of semi-transparent metallized film (34) over the phosphor matrix layer (26) prior to the encapsulating step.

20. A process according to claims 17 to 19, wherein the step of providing the phosphor particles includes providing phosphor particles of ZnS:Cu electroluminescent phosphor.

21. A process according to any one of claims 17 to 20, wherein the step of providing the at least one electroluminescent lighting element (20) includes providing a plurality of individual spaced apart electroluminescent lamp element (321 such that the electroluminescent light strip (10) is selectively divisible into smaller strips.

## Patentansprüche

1. Elektroluminiszierendes Leuchtband (10), bestehend aus
mindestens einem elektroluminiszierenden Lichtelement (20) mit einer ersten leitfähigen Schicht (22), einer Leuchtstoff-Matrixschicht (26) und einer zweiten leitfähigen Schicht (28);
Mitteln (30,32) zum elektrischen Anregen des elektroluminiszierenden Lichtelements (20); und
einem kontinuierlichen, feuchtigkeitsundurchlässigen, extrudierten Polymer (36) zum Verkapseln des elektroluminiszierenden Lichtelements (20),
dadurch gekennzeichnet, daß die Leuchtstoffpartikel in der Leuchtstoff-Matrixschicht (26) mit hydrolisiertem Alkylaluminium beschichtet sind, um die Leuchtstoffpartikel feuchtigkeitsfest zu machen.

2. Leuchtband (10) nach Anspruch 1, bei dem die Mittel zum elektrischen Anregen mindestens eines elektroluminiszierenden Lichtelementes (20) aus zwei Leiterstreifen (30, 32) bestehen, die an jeder Seite des Lichtelementes (20) angeschlossen sind.

3. Leuchtband (10) nach Anspruch 3, bei dem die Leiterstreifen (30,32) in Längsrichtung des elektroluminiszierenden Lichtelements (20) verlaufen.

4. Leuchtband (10) nach Anspruch 2 oder 3, mit einer Schicht aus leitfähiger Silbertinte (128) zwischen der ersten leitfähigen Schicht 122 und dem ersten Leiterstreifen (130).

5. Leuchtband (10) nach einem der vorhergehenden Ansprüche, bei dem das kontinuierliche, feuchtigkeitsundurchlässige Polymer (36) auf und über dem elektroluminiszierenden Lichtelement (20) extrudiert wird.

6. Leuchtband (10) nach einem der vorhergehenden Ansprüche, bei dem der Streifen (10) eine Zierleiste (10) für ein Fahrzeug (12) ist.

7. Leuchtband (10) nach einem der vorhergehenden Ansprüche, bei dem die erste leitfähige Schicht (22) mit einer dielektrischen Schicht (24) versehen ist.

8. Leuchtband (10) nach einem der vorhergehenden Ansprüche, bei dem die Leuchtstoffpartikel einen ZnS:Cu elektroluminiszierenden Leuchtstoff aufweisen.

9. Leuchtband (10) nach einem der vorhergehenden Ansprüche, das ferner eine halbtransparente metallisierte Filmschicht (34) gegenüber der Leuchtstoff-Matrixschicht (26) aufweist.

10. Leuchtband (10) nach Anspruch 9 und den Ansprüchen 2, 3 oder 4, bei dem der halbtransparente Film (34) elektrisch leitfähig ist, so daß einer der Leiterstreifen (30, 32) neben dem Film (34) auf einer Seite des Films (34) gegenüber der Leuchtstoff-Matrixschicht (26) angeordnet ist.

11. Leuchtband (10) nach einem der vorhergehenden Ansprüche, bei dem die erste und zweite leitfähige Schicht (22,28) aus einem Werkstoff bestehen, der aus Indium-Zinnoxid, Indiumoxid, Kohlenstoff und Silber ausgewählt ist.

12. Leuchtband (10) nach einem der vorhergehenden Ansprüche, bei dem mindestens ein elektroluminiszierendes Lichtelement (20) aus mehreren beabstandeten Lichtelementen (321) besteht, die längs des Leuchtbandes (10) angeordnet sind.

13. Leuchtband (10) nach einem der vorhergehenden Ansprüche, bei dem das extrudierte Polymer (36) ein Polymer mit kleiner Dampfdurchlässigkeit ist.

14. Leuchtband (10) nach Anspruch 13, bei dem das Polymer (36) mit kleiner Dampfdurchlässigkeit aus einem ionomeren Kunststoff, Polyethylen hoher Dichte und Polychlortrifluorethylen ausgewählt ist.

15. Leuchtband (10) nach einem der vorhergehenden Ansprüche, bei dem das Leuchtband (10) flexibel ist.

16. Leuchtband (10) nach einem der vorhergehenden Ansprüche, bei dem das extrudierte Polymer (36) eine Feuchtigkeitssperre ist.

17. Verfahren zum Herstellen eines elektroluminiszierenden Leuchtbandes (10) mit folgenden Schritten:
a) Es wird mindestens ein elektroluminiszierendes Lichtelement (20) verwendet, das aus einer elektrisch leitfähigen Schicht (22), einer Leuchtstoff-Matrixschicht (26) und mindestens zwei Leiterstreifen (30,32) besteht, wobei die Leiterstreifen (30,32) über das Leuchtband (10) hinaus vorstehen; und
b) die elektroluminiszierende Lichtquelle wird in einem Extrudat (36) eingekapselt, indem ein Polymer um das Lichtelement (20) extrudiert wird,
dadurch gekennzeichnet, daß die Leuchtstoff-Matrixschicht mit mehreren Phosphorpartikeln versehen ist, die mit einem hydrolisierten Alkylaluminium beschichtet sind, um die Leuchtstoff-Matrixschicht (26) feuchtigkeitsfest zu machen.

18. Verfahren nach Anspruch 17, bei dem die Leiterstreifen (30,32) auf der Gesamtlänge des Lichtelementes (20) auf entgegengesetzten Seiten des Lichtelementes (20) angeordnet werden, um das elektroluminiszierende Lichtelement (20) im wesentlichen auf der gesamten Länge des Lichtelementes (20) elektrisch anzuregen.

19. Verfahren nach Anspruch 17 oder 18, bei dem ferner eine Schicht aus halbtransparentem metallisiertem Film (34) über die Leuchtstoff-Matrixschicht (26) vor dem Einkapseln eingebaut wird.

20. Verfahren nach den Ansprüchen 17 bis 19, bei dem als Leuchtstoffpartikel solche verwendet werden, welche aus ZnS:CU elektroluminiszierenden Leuchtstoff bestehen.

21. Verfahren nach einem der Ansprüche 17 bis 20, bei dem das elektroluminiszierende Lichtelement (20) aus mehreren einzelnen, voneinander beabstandeten Lichtelementen (321) besteht, derart, daß das Leuchtband (10) in kürzere Bandstücke wahlweise unterteilbar ist.

## Revendications

1. Bande électroluminescente allongée (10) comprenant :
au moins un élément de lampe électroluminescente (20) comportant une première couche conductrice (22), une couche (26) de matrice de substance fluorescente et une seconde couche conductrice (28);
un moyen (30, 32) pour activer électriquement l'élément de lampe électroluminescente (20); et
un polymère extrudé continu, imperméable à l'humidité (36), encapsulant l'élément de lampe électroluminescente (20);
caractérisée en ce que les particules de la substance fluorescente dans la couche de matrice de substance fluorescente (26) sont revêtues d'un alkylaluminium hydrolysé de manière à rendre résistantes à l'humidité les particules de la substance fluorescente.

2. Bande électroluminescente allongée (10) selon la revendication 1, dans laquelle le moyen pour activer électriquement au moins un élément de lampe électroluminescente (20) comprend une paire de bandes collectrices (30, 32) reliées électriquement à chaque côté de l'élément de lampe électroluminescente (20).

3. Bande électroluminescente allongée (10) selon la revendication 2, dans laquelle les bandes collectrices (30, 32) s'étendent sur la longueur de l'élément de lampe électroluminescente (20).

4. Bande électroluminescente allongée (10) selon la revendication 2 ou la revendication 3, qui comprend aussi une couche d'encre conductrice à l'argent (128) disposée entre la première couche conductrice (122) et la première bande collectrice (130).

5. Bande électroluminescente allongée (10) selon l'une quelconque des revendications précédentes, dans laquelle le polymère continu, imperméable à l'humidité (36) est extrudé sur et autour de l'élément de lampe électroluminescente (20).

6. Bande électroluminescente allongée (10) selon l'une quelconque des revendications précédentes, dans laquelle la bande (10) est une moulure d'ornement (10) pour un véhicule (12).

7. Bande électroluminescente allongée (10) selon l'une quelconque des revendications précédentes, dans laquelle la première couche conductrice (22) présente un revêtement diélectrique (24).

8. Bande électroluminescente allongée (10) selon l'une quelconque des revendications précédentes, dans laquelle les particules de la substance fluorescente comprennent une substance électroluminescente en ZnS:Cu.

9. Bande électroluminescente allongée (10) selon l'une quelconque des revendications précédentes, qui comporte aussi une couche (34) d'un film métallisé semi-transparent opposée à la couche (26) de matrice de substance fluorescente.

10. Bande électroluminescente allongée (10) selon la revendication 9, lorsqu'elle dépend de la revendication 2, 3 ou 4, dans laquelle le film semi-transparent (34) est électriquement conducteur de sorte que l'une desdites bandes collectrices (30, 32) est placée en étant contiguë au film (34) sur un côté du film (34) opposé à la couche (26) de matrice de substance fluorescente.

11. Bande électroluminescente allongée (10) selon l'une quelconque des revendications précédentes, dans laquelle les première et seconde couches conductrices (22, 28) sont constituées d'un matériau choisi parmi l'oxyde d'indium et d'étain, l'oxyde d'indium, le carbone et l'argent.

12. Bande électroluminescente allongée (10) selon l'une quelconque des revendications précédentes, dans laquelle l'élément de lampe électroluminescente (20) est une multitude d'éléments électroluminescents espacés les uns des autres (321) qui sont disposés sur la longueur de la bande électroluminescente (10).

13. Bande électroluminescente allongée (10) selon l'une quelconque des revendications précédentes, dans laquelle le polymère extrudé (36) est un polymère à faible vitesse de transmission des vapeurs.

14. Bande électroluminescente allongée (10) selon la revendication 13, dans laquelle le polymère à faible vitesse de transmission des vapeurs (36) est choisi parmi une résine ionomère, un polyéthylène haute densité et le polychlorotrifluoroéthylène.

15. Bande électroluminescente allongée (10) selon l'une quelconque des revendications précédentes, dans laquelle la bande (10) est flexible.

16. Bande électroluminescente allongée (10) selon l'une quelconque des revendications précédentes, dans laquelle le polymère extrudé (36) est une barrière contre l'humidité.

17. Procédé pour la fabrication d'une bande électroluminescente allongée (10), comprenant les étapes consistant à :
a) fournir au moins un élément de lampe électroluminescente (20) qui comporte une couche électriquement conductrice (22), une couche de matrice de substance fluorescente (26) et au moins deux bandes collectrices (30, 32), où les bandes collectrices (30, 32) s'étendent à partir de la bande électroluminescente (10); et
b) encapsuler ladite au moins une lampe électroluminescente allongée (20) dans un extrudat (36) en extrudant un polymère autour de l'élément de lampe électroluminescente (20),
caractérisé en ce que la couche de matrice de substance fluorescente comporte une multitude de particules de substance fluorescente revêtues avec un alkylaluminium hydrolysé de manière à rendre résistante à l'humidité la couche (26) de matrice de substance fluorescente.

18. Procédé selon la revendication 17, qui comprend le positionnement des bandes collectrices (30, 32) sur toute la longueur de l'élément de lampe électroluminescente (20) sur les côtés opposés de l'élément de lampe électroluminescente (20) pour exciter électriquement l'élément de lampe électroluminescente sur la quasi totalité de la longueur de l'élément de lampe électroluminescente (20).

19. Procédé selon la revendication 17 ou 18, qui comprend l'étape consistant à interposer une couche d'un film métallisé semi-transparent (34) sur la couche de matrice de substance fluorescente (26) avant l'étape d'encapsulage.

20. Procédé selon les revendications 17 à 19, dans lequel l'étape consistant à fournir les particules de substance fluorescente comprend la fourniture de particules de substance fluorescente en substance fluorescente de ZnS:Cu.

21. Procédé selon l'une quelconque des revendications 17 à 20, dans lequel l'étape consistant à fournir au moins un élément électroluminescent (20) comprend la fourniture d'une multitude d'éléments de lampe électroluminescente individuels (321) espacés les uns des autres de sorte que la bande électroluminescente (10) peut être sélectivement divisée en bandes plus petites.
